# FASCICULE DE BREVET EUROPEEN

(11) **EP 2 121 351 B1**
(45) Date de publication et mention de la délivrance du brevet: **11.01.2012**
(21) Numéro de dépôt: 07822575.2
(22) Date de dépôt: 14.11.2007
(51) Int. Cl.: B60C 9/18, B60C 9/20

(54) **PNEUMATIQUE POUR VEHICULE LOURD**
REIFEN FÜR SCHWERFAHRZEUG
TIRE FOR HEAVY VEHICLE

(30) Priorité: 21.12.2006 FR 0611394
(43) Date de publication de la demande: 25.11.2009
(73) Titulaire: Société de Technologie Michelin, 63000 Clermont-Ferrand (FR); MICHELIN Recherche et Technique S.A., 1763 Granges-Paccot (CH)
(72) Inventeur: EL-BERRICHI, Reda, F-63100 Clermont-Ferrand (FR)
(74) Mandataire: Le Cam, Stéphane Georges Elie
(86) Numéro de dépôt international: PCT/EP2007/062314
(87) Numéro de publication internationale: WO 2008/080684

(56) Documents cités:
- JP-A- 10 250 313
- JP-A- 11 115 412

## Description

La présente invention concerne un pneumatique, destiné à équiper un véhicule ou engin lourd de type génie civil, ledit pneumatique comprenant au moins une armature de carcasse radiale surmontée radialement d'une bande de roulement et présentant une largeur axiale supérieure à 25 pouces. Un tel pneumatique est connu, par example, de JP-A-11-115 412.

Bien que non limitée à ce type d'application, l'invention sera plus particulièrement décrite en référence à des pneumatiques pour véhicule de type chargeuse travaillant dans des mines et présentant une largeur axiale supérieure à 37 pouces. Ce type de chargeuse est utilisé dans les mines pour le remplissage des bennes des véhicules de type dumper.

L'armature de renforcement ou renforcement des pneumatiques et notamment des pneumatiques d'engin de génie civil est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc.), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Concernant la conception habituelle des pneumatiques pour engin de génie civil, l'armature de carcasse radiale, ancrée dans chaque bourrelet, est composée d'au moins une couche d'éléments de renforcement métalliques, les dits éléments étant sensiblement parallèles entre eux dans la couche. L'armature de carcasse est habituellement surmontée d'une armature de sommet composée d'au moins deux couches de sommet de travail d'éléments de renforcement métalliques, mais croisés d'une couche à la suivante en faisant avec la direction circonférentielle des angles compris entre 15 et 70°. Entre l'armature de carcasse et les couches de sommet de travail, on trouve habituellement deux couches d'éléments de renforcements, croisés d'une couche à la suivante et présentant des angles inférieures à 12° ; la largeur de ces couches d'éléments de renforcement est habituellement inférieure à celles des couches de travail. Radialement à l'extérieur des couches de travail, on trouve encore des couches de protection dont les éléments de renforcement présentent des angles compris entre 10 et 65°. L'armature de sommet est elle-même surmontée d'une bande de roulement.

On entend par « axiale », une direction parallèle à l'axe de rotation du pneumatique et par « radiale » une direction coupant l'axe de rotation du pneumatique et perpendiculaire à celui-ci. L'axe de rotation du pneumatique est l'axe autour duquel il tourne en utilisation normale.

Un plan circonférentiel ou plan circonférentiel de coupe est un plan perpendiculaire à l'axe de rotation du pneumatique. Le plan équatorial ou plan médian circonférentiel est le plan circonférentiel passant par le centre ou sommet de la bande de roulement et qui divise le pneumatique en deux moitiés.

Un plan radial est un plan qui contient l'axe de rotation du pneumatique.

La direction longitudinale du pneumatique, ou direction circonférentielle, est la direction correspondant à la périphérie du pneumatique et définie par la direction de roulement du pneumatique.

Les pneumatiques pour engins de génie civil, tels que décrits ci-dessus, sont habituellement soumis à une pression comprise entre 4 et 10 bars pour des charges et dimensions usuelles.

Dans le cas des pneumatiques pour chargeuses décrites précédemment l'armature sommet du pneumatique est particulière dans la mesure où lesdites chargeuses sont des véhicules articulées qui peuvent être équipées de pneumatiques présentant des rigidités de dérive très faibles. Les armatures de sommet ainsi définies pour ce type de pneumatiques, qui comporte notamment des couches de travail dont les éléments de renforcement présentent des angles avec la direction circonférentielle supérieur à 45°, sont particulièrement intéressantes en terme d'usure pour les usages liés à ce type de véhicule.

Par contre, il peut apparaître dans des conditions d'usage particulièrement sévères de ces pneumatiques une détérioration des couches de travail de l'armature de sommet dans les zones d'extrémités des couches d'éléments de renforcements présentant des angles inférieures à 12°.

Les inventeurs se sont ainsi donnés pour mission de fournir des pneumatiques présentant des propriétés satisfaisantes notamment en terme d'usure et ne présentant pas de détérioration des couches de travail quelles que soient les conditions d'utilisation desdits pneumatiques.

Ce but a été atteint selon l'invention par un pneumatique pour véhicule lourd à armature de carcasse radiale de largeur supérieure à 25 pouces comportant une armature sommet radialement intercalée entre l'armature de carcasse et la bande de roulement, ladite armature de sommet étant constituée d'au moins une armature de sommet de travail constituée d'au moins une couche d'éléments de renforcement orientés sensiblement circonférentiellement, radialement surmontée d'au moins deux couches dites de travail dont les éléments de renforcement présentent un angle compris entre 15 et 70° avec la direction circonférentielle, parallèles entre eux dans chaque couche et croisés d'une couche à l'autre, lesdites deux couches de travail étant axialement plus larges que la couche d'éléments de renforcement orientés sensiblement circonférentiellement, chacune des couches de travail étant constituée d'au moins deux parties axialement séparées, la distance entre l'extrémité axialement intérieure de chacune des parties axialement extérieures d'au moins la couche de travail radialement la plus à l'intérieur et l'extrémité de la couche radialement la plus à l'extérieur d'éléments de renforcement orientés sensiblement circonférentiellement étant inférieure à 45 mm, et l'intervalle, selon la direction axiale, entre deux parties de chacune des couches de sommet de travail étant supérieur à 5 mm et de préférence supérieur à 15 mm.

Avantageusement, les éléments de renforcement orientés sensiblement circonférentiellement présentent un angle avec la direction circonférentielle inférieur à 12°.

Selon un mode de réalisation préféré de l'invention, la distance entre l'extrémité axialement intérieure de chacune des parties axialement extérieures d'au moins la couche de travail radialement la plus à l'intérieur et l'extrémité de la couche d'éléments de renforcement orientés sensiblement circonférentiellement est inférieure à 25 mm et de préférence inférieure à 10 mm.

Le pneumatique ainsi décrit selon l'invention comporte des couches de travail qui présentent au moins une discontinuité selon la direction axiale, ladite discontinuité se trouvant à proximité de l'extrémité d'une couche d'éléments de renforcement orientés sensiblement circonférentiellement ; la distance entre l'extrémité axialement intérieure de chacune des parties axialement extérieures d'au moins la couche de travail radialement la plus à l'intérieur et l'extrémité de la couche radialement la plus à l'extérieur d'éléments de renforcement orientés sensiblement circonférentiellement étant inférieure à 45 mm. En outre, l'interruption ou discontinuité axiale d'une couche de travail est supérieure à 5 mm.

Les essais réalisés avec des pneumatiques ainsi réalisés équipant une chargeuse utilisée dans des conditions particulièrement sévères pour les pneumatiques ont montré, en comparaison avec des pneumatiques de référence comportant une architecture semblable sans les caractéristiques de discontinuité des couches de travail, qu'il n'apparaît pas de dégradation desdites couches de travail sur le pneumatique selon l'invention alors que les pneumatiques de référence sont endommagés.

Les inventeurs pensent interpréter ces résultats par une limitation des contraintes de compression des éléments de renforcement des couches de travail pouvant apparaître lors des roulages. Les interruptions dans lesdites couches de travail semblent effectivement limiter ces mises en compression des éléments de renforcement, tout au moins dans des zones sensibles.

De préférence selon l'invention, l'armature de sommet de travail comporte deux couches d'éléments de renforcement orientés sensiblement circonférentiellement.

De préférence encore selon l'invention, les éléments de renforcement des couches de travail présentent un angle supérieur à 45°. De tels angles des couches de travail sont particulièrement intéressants en ce qui concerne les propriétés d'usure du pneumatique.

Selon une variante avantageuse de l'invention, l'extrémité axialement intérieure d'au moins une partie axialement extérieure d'au moins la couche de travail radialement la plus à l'intérieur, est axialement intérieure à l'extrémité de la couche d'éléments de renforcement orientés sensiblement circonférentiellement, radialement la plus à l'extérieur. Selon cette variante de réalisation de l'invention, au moins une partie axialement extérieure de la couche de travail radialement la plus à l'intérieure présente une zone de recouvrement axiale avec la couche d'éléments de renforcement orientés sensiblement circonférentiellement, qui lui est radialement adjacente. Une telle configuration de l'architecture sommet peut conduire pour certains types d'utilisation des pneumatiques à de meilleurs résultats en termes d'usure et d'endurance du pneumatique par une meilleure répartition des contraintes entre les différentes couches constituant l'armature de sommet.

Selon d'autres variantes de réalisation de l'invention, l'extrémité axialement intérieure d'au moins une partie axialement extérieure d'au moins la couche de travail radialement la plus à l'intérieur, est axialement extérieure à l'extrémité d'au moins la couche d'éléments de renforcement orientés sensiblement circonférentiellement, radialement la plus à l'extérieur. Selon certaines de ces variantes de réalisations de l'invention, l'extrémité axialement intérieure d'au moins une partie axialement extérieure d'au moins la couche de travail radialement la plus à l'intérieur, est axialement extérieure aux extrémités de chacune des couches d'éléments de renforcement orientés sensiblement circonférentiellement ; les extrémités axialement intérieures d'au moins une partie axialement extérieure d'au moins ladite couche de travail sont alors avantageusement axialement intérieures aux extrémités d'au moins une nappe de protection sur laquelle il sera revenu ultérieurement.

Une réalisation de l'invention prévoit que les extrémités axialement intérieures des parties axialement extérieures des deux couches de travail sont contiguës. Conformément à cette réalisation de l'invention, les deux couches de travail sont interrompues axialement à la même position. Une telle réalisation peut notamment permettre de faciliter le procédé de fabrication.

Une autre réalisation de l'invention, avantageuse notamment en termes de fonctionnement mécanique du pneumatique, prévoit que les extrémités axialement intérieures des parties axialement extérieures des deux couches de travail ne sont pas contiguës et donc décalées axialement.

Avantageusement encore selon l'invention, les longueurs axiales des interruptions sont identiques pour les deux couches de travail, notamment lorsque les extrémités sont contiguës. L'invention prévoit tout de même selon certaines configurations notamment fonction de l'agencement des différentes couches de sommet que les interruptions peuvent présenter des largeurs axiales variables d'une couche à l'autre.

Une première variante de l'invention prévoit qu'au moins une des couches de travail est constituée de deux parties axialement séparées. Selon cette première variante de réalisation de l'invention, les couches de travail sont constituées par deux parties axialement extérieures séparées axialement l'une de l'autre sur une distance relativement importante au moins égale à la largeur axiale de la couche d'éléments de renforcement orientés sensiblement circonférentiellement diminuée de 90 mm et de préférence diminuée 50 mm et de préférence encore de 20 mm.

Une telle variante de réalisation de l'invention va notamment permettre de diminuer les rigidités au centre de la bande de roulement du pneumatique. Avantageusement encore, chacune des couches de travail est constituée de deux parties axialement séparées.

Une deuxième variante de l'invention prévoit qu'au moins une des couches de travail est constituée de trois parties axialement séparées et en conséquence deux zones axiales de discontinuité au sein de chacune des couches de travail. Une telle variante de réalisation conduit à un résultat semblable à la première variante, les couches de travail demeurant présentent sous la partie centrale de la bande de roulement.

Selon cette deuxième variante de réalisation de l'invention, les angles des éléments de renforcement formés avec la direction circonférentielle peuvent être identiques dans les trois parties d'une même couche de travail ou bien différents et notamment être identiques dans les deux parties axiales et différents dans la partie centrale par rapport à ces parties axiales. Avantageusement encore, chacune des couches de travail est constituée de trois parties axialement séparées.

Selon l'une ou l'autre de ces variantes de réalisation de l'invention, les essais réalisés ont montré que les pneumatiques selon l'invention autorisent des roulages sur des distances plus importantes dans des conditions particulièrement sévères sans voir apparaître de dégradation au niveau des couches de travail comme c'est le cas lors de l'utilisation de pneumatiques usuels dans les mêmes conditions de roulage.

Selon un mode de réalisation préféré de l'invention, la couche de travail radialement la plus à l'intérieur est axialement la plus large.

De façon connue en soi, notamment pour améliorer la résistance du pneumatique aux coupures et perforations, l'armature de sommet de travail est complétée par une armature de protection, comportant au moins une couche de protection.

De préférence encore, l'armature de sommet comporte au moins deux couches de protection, métalliques élastiques, et la couche de protection radialement la plus à l'intérieur est axialement la plus large.

Avantageusement selon l'invention, les couches de protection présentent des largeurs inférieures aux largeurs des couches de travail.

De préférence encore, les éléments de renforcement des couches de protection sont croisés entre eux.

Des variantes de réalisation de l'invention prévoient des couches de protection constituées de bandelettes se recouvrant partiellement. Quel que soit le type de couches de protection utilisé, les renforts élastiques utilisés peuvent être des éléments disposés de manière rectiligne ou sous forme sinusoïdale.

D'autres détails et caractéristiques avantageux de l'invention ressortiront ci-après de la description d'exemples de réalisation de l'invention en référence aux figures 1 à 5 qui représentent :
- figure 1, une représentation schématique d'un pneumatique selon un premier mode de réalisation de l'invention,
- figure 2, une représentation schématique d'un pneumatique selon un deuxième mode de réalisation de l'invention,
- figure 3, une représentation schématique d'un pneumatique selon un troisième mode de réalisation de l'invention,
- figure 4, une représentation schématique d'un pneumatique selon un quatrième mode de réalisation de l'invention,
- figure 5, une représentation schématique d'un pneumatique selon un cinquième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

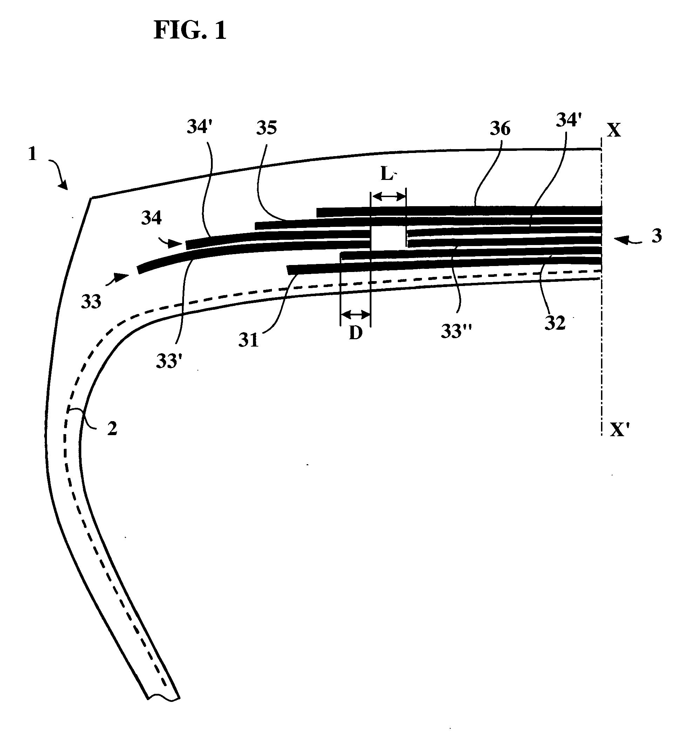

La Figure 1 représente un schéma vu selon une coupe radiale d'un pneumatique 1 réalisé conformément à l'invention. Le pneumatique 1 de dimension 45/65 R 45 comporte une armature de carcasse 2 ancrée dans deux bourrelets, non représentés sur la figure. Cette armature de carcasse 2 est frettée par une armature de sommet 3, formée radialement de l'intérieur à l'extérieur :
- d'une première couche 31 formée de câbles métalliques inextensibles orientés par rapport à la direction circonférentielle selon un angle égal à 5°,
- d'une deuxième couche 32 formée de câbles métalliques inextensibles, orientés par rapport à la direction circonférentielle selon un angle égal à 5° et croisés avec les câbles métalliques de la couche 31 ; la couche 32 est axialement plus petite que la couche 31,
- d'une couche de travail 33 formée de câbles métalliques orientés par rapport à la direction circonférentielle selon un angle égal à 60° et croisés avec les câbles métalliques de la couche 32. La couche de travail 33 est interrompue et formée de trois parties (deux seulement visibles sur la figure), deux parties axialement extérieures 33' et une partie centrale 33". La largeur L de l'interruption de la couche 33, c'est-à-dire la distance selon la direction axiale entre les extrémités des parties 33' et 33" est égale à 30 mm. La distance D entre l'extrémité axialement intérieure de la partie 33' et l'extrémité de la couche 32 est égale à 20 mm, l'extrémité axialement intérieure de la partie 33' étant axialement intérieure à l'extrémité de la couche 32.
- d'une couche de travail 34 formée de câbles métalliques orientés par rapport à la direction circonférentielle selon un angle égal à 60°, et croisés avec les câbles métalliques de la couche 33. La couche de travail 34 est interrompue et formée de trois parties, deux parties axialement extérieures 34' et une partie centrale 34". La couche 34 est interrompue axialement comme la couche 33, la largeur axiale des parties axialement extérieures 34' étant inférieures à la largeur axiale des parties axialement extérieures 33'.
- d'une couche de protection 35 formée de câbles métalliques extensibles orientés par rapport à la direction circonférentielle selon un angle égal à 16°, croisés avec les câbles de la couche 34 et de largeur axiale inférieure à la largeur de la couche de travail 34.
- d'une couche de protection 36 formée de câbles métalliques extensibles orientés selon par rapport à la direction circonférentielle un angle égal à 16°, croisés avec les câbles de la couche 35 et de largeur axiale inférieure à la largeur de la couche de protection 35.

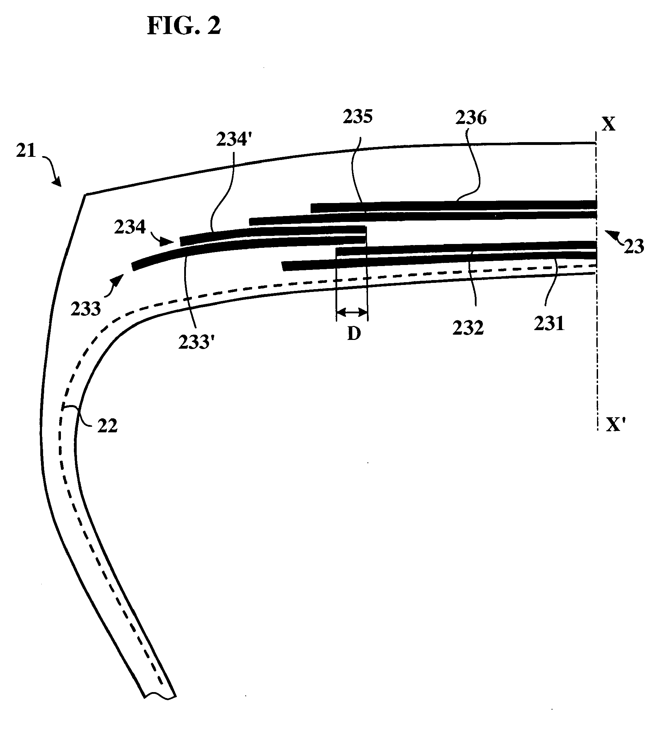

La figure 2 illustre une deuxième variante de réalisation de l'invention. Le pneumatique 21 diffère de celui de la figure 1 en ce que les couches 233 et 234 sont interrompues et sont chacune constituées de deux parties 233', 234' dont les extrémités axialement intérieures sont axialement distantes des extrémités de la couche 232 d'une distance D égale à 20 mm. Sur cette figure, la distance axiale entre les extrémités des deux parties 233' ou 234' est égale à la largeur axiale de la couche 232 diminuée de deux fois la distance D.

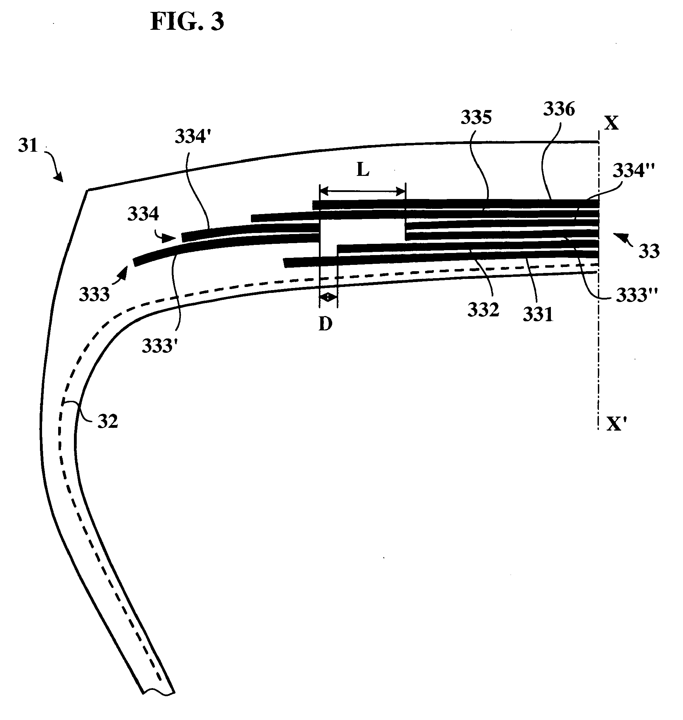

La figure 3 illustre une troisième variante de réalisation de l'invention. Le pneumatique 31 diffère de celui de la figure 1 en ce que les couches 333 et 334 sont interrompues de sorte que les extrémités axialement intérieures des parties axialement extérieures 333' et 334' sont axialement extérieures à l'extrémité de la couche 332. Sur la représentation de la figure 3, les couches de travail 333 et 334 sont réalisées en trois parties 333', 333" et 334' et 334" comme dans le cas de la figure 1. Ces mêmes couches 333 et 334 pourraient encore être réalisées en deux parties comme dans le cas de la figure 2. La distance axiale entre les extrémités des deux parties 233' ou 234' serait alors égale à la largeur axiale de la couche 232 augmentée de deux fois la distance D égale à 10 mm.

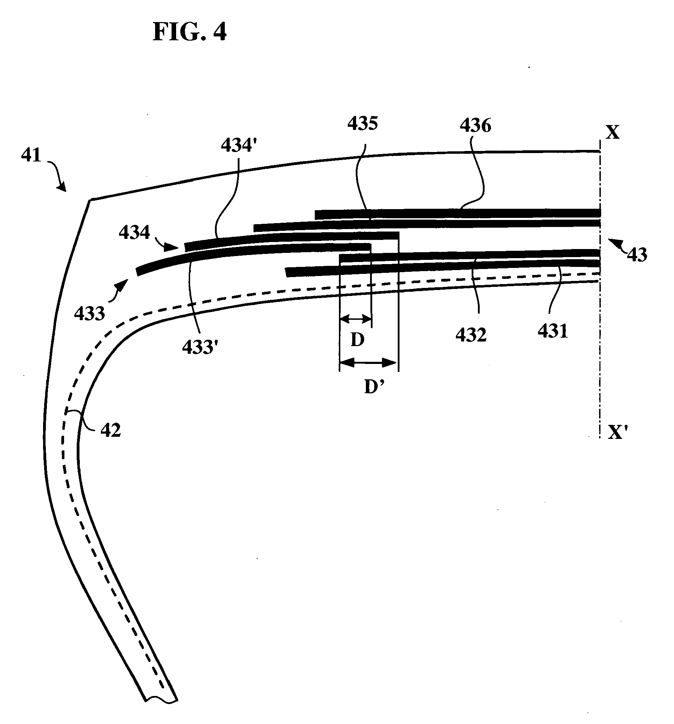

La figure 4 illustre une quatrième variante de réalisation de l'invention. Le pneumatique 41 diffère de celui de la figure 1, d'une part comme dans le cas de la figure 2 en ce que les couches 433 et 434 sont interrompues et sont chacune constituées de deux parties 433', 434' et d'autre part en ce que les extrémités axialement intérieures desdites couches sont axialement décalées l'une par rapport à l'autre et donc non contiguës. L'extrémité axialement intérieure de la partie 433' est distante de l'extrémité de la couche 432 d'une distance D égale à 20 mm. L'extrémité axialement intérieure de la partie 434' est distante de l'extrémité de la couche 432 d'une distance D' égale à 50 mm Sur cette figure 4, la distance axiale entre les extrémités axialement intérieures des deux parties 433' est égale à la largeur axiale de la couche 432 diminuée de deux fois la distance D. De même, la distance axiale entre les extrémités axialement intérieures des deux parties 434' est égale à la largeur axiale de la couche 432 diminuée de deux fois la distance D'.

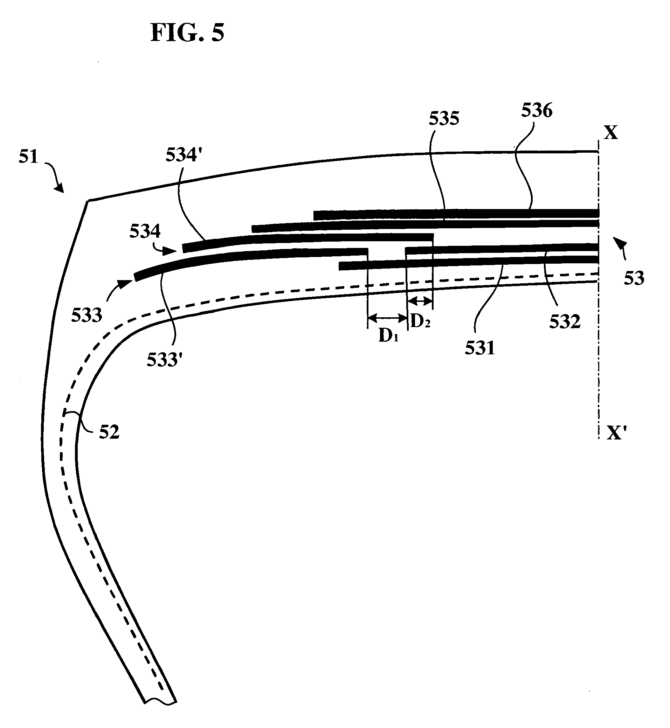

La figure 5 illustre une autre variante de réalisation de l'invention. Le pneumatique 51 représenté sur cette figure 5 comporte comme précédemment deux couches de travail 533 et 534 interrompues. La couche de travail 534 est constituée de deux parties 534' dont les extrémités axialement intérieures sont à une distance D₂ des extrémités de la couche 532 égale à 20 mm. La couche de travail 533 est également constituée de deux parties 533' séparées axialement par la couche 532 dont les extrémités sont à une distance D₁ des extrémités axialement intérieures des parties 533' égale à 20 mm.

Selon cette représentation de la figure 5, la combinaison de la couche de travail 433 et de la couche 432 s'assimile à une couche en trois parties, dans la quelle les parties axialement extérieures 433' sont constituées d'éléments de renforcement orientés à 60° et dans laquelle la partie centrale 432 est constituée d'éléments de renforcement orientées à 5°.

Les différents exemples décrits sur ces figures ne doivent pas être interprétés de matière limitative, d'autres variantes de réalisation de l'invention étant bien entendu réalisables.

Tout d'abord, dans les exemples, les angles des éléments de renforcement des différentes couches de l'armature de sommet ont été considérés comme étant toujours les mêmes. Il est clair que ces angles peuvent être différents ; les angles des éléments de renforcement des couches de travail peuvent par exemple être choisis inférieurs lorsque notamment les couches de travail sont réalisées en deux parties.

Il est notamment également possible d'envisager de réaliser des couches de travail interrompues avec trois parties dans lesquelles les angles des éléments de renforcement ne sont pas identiques ; par exemple, la partie centrale peut comporter des éléments de renforcement présentant des angles inférieurs à ceux des parties axialement extérieures et par exemple proche de ceux des couches de protection.

Un pneumatique réalisé conformément à l'invention a été testé sur un véhicule de type chargeuse CAT 992G.

Des essais comparatifs ont été réalisés sur la base du pneumatique présenté sur la figure 4. La comparaison a été faite avec un pneumatique de référence identique présentant des architectures sommets semblables, si ce n'est que les couches de travail ne sont pas interrompues.

Les pneumatiques ont été testés sur un même véhicule, celui-ci circulant sur le même tracé simulant un parcours très pénalisant pour les pneumatiques et conduit par le même conducteur. Le parcours, qui reproduit l'utilisation d'une chargeuse avec un godet rempli, comporte notamment des phases sur des distances courtes de marche avant et marche arrière, des démarrages avant et arrière imposant des passages de couple important depuis une vitesse nulle et des phases de roulage sur des distances plus longues comportant des passages en courbes.

Les essais ont confirmé après des roulages sur une durée de 300 heures que les pneumatiques selon l'invention ne présente pas de dégradation alors que les pneumatiques de référence laissent apparaître un endommagement des nappes de travail dans les zones des extrémités des nappes d'éléments de renforcement orientées sensiblement circonférentiellement.

## Revendications

1. Pneumatique (1) pour véhicule lourd à armature de carcasse radiale (2) de largeur supérieure à 25 pouces comportant une armature sommet (3) radialement intercalée entre l'armature de carcasse et la bande de roulement, ladite armature de sommet étant constituée d'au moins une armature de sommet de travail constituée d'au moins une couche d'éléments de renforcement orientés sensiblement circonférentiellement (31, 32) radialement surmontée d'au moins deux couches dites de travail (33, 34) dont les éléments de renforcement présentent un angle compris entre 15 et 70° avec la direction circonférentielle, parallèles entre eux dans chaque couche et croisés d'une couche à l'autre, lesdites deux couches de travail étant axialement plus larges que la couche d'éléments de renforcement orientés sensiblement circonférentiellement, chacune des couches de travail (33, 34) étant constituée d'au moins deux parties axialement séparées (33', 33"; 34', 34"), **caractérisé en ce que** la distance (D) entre l'extrémité axialement intérieure de chacune des parties axialement extérieures (33') d'au moins la couche de travail radialement la plus à l'intérieur (33) et l'extrémité de la couche radialement la plus à l'extérieur d'éléments de renforcement orientés sensiblement circonférentiellement (32) est inférieure à 45 mm et **en ce que** l'intervalle (L), selon la direction axiale, entre deux parties (33', 33"; 34', 34") de chacune des couches de sommet de travail (33, 34) est supérieur à 5 mm.

2. Pneumatique (1) selon la revendication 1, **caractérisé en ce que** les éléments de renforcement orientés sensiblement circonférentiellement (31, 32) présentent un angle avec la direction circonférentielle inférieur à 12°.

3. Pneumatique (1) selon l'une des revendications 1 ou 2, **caractérisé en ce que** les éléments de renforcement des couches de travail (33, 34) présentent un angle supérieur à 45°.

4. Pneumatique (1) selon l'une des revendications 1 à 3, **caractérisé en ce que** au moins l'extrémité axialement intérieure d'une partie axialement extérieure (33') d'au moins la couche de travail radialement la plus à l'intérieur (33), est axialement intérieure à l'extrémité de la couche d'éléments de renforcement orientés sensiblement circonférentiellement, radialement la plus à l'extérieur (32).

5. Pneumatique (1) selon l'une des revendications 1 à 3, **caractérisé en ce que** au moins l'extrémité axialement intérieure d'une partie axialement extérieure (33') d'au moins la couche de travail radialement la plus à l'intérieur (33), est axialement extérieure à l'extrémité d'au moins la couche d'éléments de renforcement orientés sensiblement circonférentiellement, radialement la plus à l'extérieur (32).

6. Pneumatique (1) selon l'une des revendications 1 à 5, **caractérisé en ce que** les extrémités axialement intérieures des parties axialement extérieures (33', 34') des deux couches de travail (33, 34) ne sont axialement pas contiguës.

7. Pneumatique (1) selon l'une des revendications précédentes, **caractérisé en ce qu'**au moins une des couches de travail (33, 34) est constituée de deux parties axialement séparées (33', 33"; 34', 34").

8. Pneumatique (1) selon l'une des revendications précédentes, **caractérisé en ce que** la couche de travail radialement la plus à l'intérieur (33) est axialement la plus large.

9. Pneumatique (1) selon l'une des revendications précédentes, **caractérisé en ce que** l'armature de sommet comporte au moins une couche de protection (35, 36).

10. Pneumatique (1) selon la revendication 8, **caractérisé en ce que** l'armature de sommet comporte au moins deux couches de protection (35, 36) et **en ce que** la couche de protection radialement la plus à l'intérieur (35) est axialement la plus large.

## Claims

1. Tyre (1) for heavy vehicle with a radial carcass reinforcement (2) of a width in excess of 25 inches comprising a crown reinforcement (3) radially inserted between the carcass reinforcement and the tread, the said crown reinforcement being made up of at least one working crown reinforcement made up of at least one layer of reinforcing elements oriented substantially circumferentially (31, 32), radially surmounted by at least two so-called working layers (33, 34), the reinforcing elements of which make an angle of between 15 and 70° with the circumferential direction, are mutually parallel within each layer and are crossed from one layer to the next, the said two working layers being axially wider than the layer of substantially circumferentially oriented reinforcing elements, each of the working layers (33, 34) being made up of at least two axially separated parts (33', 33"; 34', 34"), **characterized in that** the distance (D) between the axially inner end of each of the axially outer parts (33') of at least the radially innermost working layer (33) and the end of the radially outermost layer of substantially circumferentially oriented reinforcing elements (32) is less than 45 mm and **in that** the gap (L), in the axial direction, between two parts (33', 33"; 34', 34") of each of the working crown layers (33, 34) is greater than 5 mm.

2. Tyre (1) according to Claim 1, **characterized in that** the substantially circumferentially oriented reinforcing elements (31, 32) make an angle of less than 12° with the circumferential direction.

3. Tyre (1) according to one of Claims 1 or 2, **characterized in that** the reinforcing elements of the working layers (33, 34) make an angle greater than 45°.

4. Tyre (1) according to one of Claims 1 to 3, **characterized in that** at least the axially inner end of an axially outer part (33') of at least the radially innermost working layer (33) is axially on the inside of the end of the radially outermost layer of substantially circumferentially oriented reinforcing elements.

5. Tyre (1) according to one of Claims 1 to 3, **characterized in that** at least the axially inner end of an axially outer part (33') of at least the radially innermost working layer (33) is axially on the outside of the end of at least the radially outermost layer (32) of substantially circumferentially oriented reinforcing elements.

6. Tyre (1) according to one of Claims 1 to 5, **characterized in that** the axially inner ends of the axially outer parts (33', 34') of the two working layers (33, 34) are not axially contiguous.

7. Tyre (1) according to one of the preceding claims, **characterized in that** at least one of the working layers (33, 34) is made up of two axially separated parts (33', 33"; 34', 34").

8. Tyre (1) according to one of the preceding claims, **characterized in that** the radially innermost working layer (33) is axially the widest.

9. Tyre (1) according to one of the preceding claims, **characterized in that** the crown reinforcement comprises at least one protective layer (35, 36).

10. Tyre (1) according to Claim 8, **characterized in that** the crown reinforcement comprises at least two protective layers (35, 36) and **in that** the radially innermost protective layer (35) is axially the widest.

## Patentansprüche

1. Schwerfahrzeug-Luftreifen (1) mit radialer Karkassenbewehrung (2) einer Breite von mehr als 25 Zoll, der eine Scheitelbewehrung (3) aufweist, die radial zwischen die Karkassenbewehrung und den Laufstreifen eingefügt ist, wobei die Scheitelbewehrung aus mindestens einer Arbeitsscheitelbewehrung besteht, welche aus mindestens einer Schicht von im Wesentlichen in Umfangsrichtung ausgerichteten Verstärkungselementen (31, 32) besteht, über der radial mindestens zwei so genannte Arbeitsschichten (33, 34) liegen, deren Verstärkungselemente einen Winkel zwischen 15 und 70° mit der Umfangsrichtung bilden, die in jeder Schicht parallel zueinander sind und sich von einer Schicht zur anderen kreuzen, wobei die zwei Arbeitsschichten axial größer sind als die Schicht von im Wesentlichen in Umfangsrichtung ausgerichteten Verstärkungselementen, wobei jede der Arbeitsschichten (33, 34) aus mindestens zwei axial getrennten Teilen (33', 33"; 34', 34") besteht, **dadurch gekennzeichnet, dass** der Abstand (D) zwischen dem axial inneren Ende jedes der axial äußeren Teile (33') mindestens der radial am weitesten innen liegenden Arbeitsschicht (33) und dem Ende der radial am weitesten außen liegenden Schicht von im Wesentlichen in Umfangsrichtung ausgerichteten Verstärkungselementen (32) geringer als 45 mm ist, und dass der Zwischenraum (L), gemäß der axialen Richtung, wischen zwei Teilen (33', 33"; 34', 34") jeder der Arbeitsscheitelschichten (33, 34) größer als 5 mm ist.

2. Luftreifen (1) nach Anspruch 1, **dadurch gekennzeichnet, dass** die im Wesentlichen in Umfangsrichtung ausgerichteten Verstärkungselemente (31, 32) einen Winkel mit der Umfangsrichtung von weiniger als 12° bilden.

3. Luftreifen (1) nach einem der Ansprüche 1 oder 2, **dadurch gekennzeichnet, dass** die Verstärkungselemente der Arbeitsschichten (33, 34) einen Winkel von mehr als 45° bilden.

4. Luftreifen (1) nach einem der Ansprüche 1 bis 3, **dadurch gekennzeichnet, dass** mindestens das axial innere Ende eines axial äußeren Teils (33') mindestens der radial am weitesten innen liegenden Arbeitsschicht (33) axial innen bezüglich des Endes der Schicht von im Wesentlichen in Umfangsrichtung ausgerichteten Verstärkungselementen (32) liegt, das radial am weitesten außen liegt.

5. Luftreifen (1) nach einem der Ansprüche 1 bis 3, **dadurch gekennzeichnet, dass** mindestens das axial innere Ende eines axial äußeren Teils (33') mindestens der radial am weitesten innen liegenden Arbeitsschicht (33) axial außen bezüglich des Endes mindestens der Schicht von im Wesentlichen in Umfangsrichtungen ausgerichteten Verstärkungselementen (32) liegt, das radial am weitesten außen liegt.

6. Luftreifen (1) nach einem der Ansprüche 1 bis 5, **dadurch gekennzeichnet, dass** die axial inneren Enden der axial äußeren Teile (33', 34') der zwei Arbeitsschichten (33, 34) axial nicht aneinander anschließen.

7. Luftreifen (1) nach einem der vorhergehenden Ansprüche, **dadurch gekennzeichnet, dass** mindestens eine der Arbeitsschichten (33, 34) aus zwei axial getrennten Teilen (33', 33"; 34', 34") besteht.

8. Luftreifen (1) nach einem der vorhergehenden Ansprüche, **dadurch gekennzeichnet, dass** die radial am weitesten innen liegende Arbeitsschicht (33) axial die breiteste ist.

9. Luftreifen (1) nach einem der vorhergehenden Ansprüche, **dadurch gekennzeichnet, dass** die Scheitelbewehrung mindestens eine Schutzschicht (35, 36) aufweist.

10. Luftreifen (1) nach Anspruch 8, **dadurch gekennzeichnet, dass** die Scheitelbewehrung mindestens zwei Schutzschichten (35, 36) aufweist, und dass die radial am weitesten innen liegende Schutzschicht (35) axial die breiteste ist.
